# EUROPEAN PATENT APPLICATION

(11) **EP 4 230 574 A1**
(43) Date of publication of application: **23.08.2023**
(21) Application number: 22157626.7
(22) Date of filing: 18.02.2022
(51) Int. Cl.: C01B 3/38, B63H 21/00

(54) **PROPULSION SYSTEM FOR A SHIP**

(71) Applicant: RINA Hellas Ltd., 18545 Priaeus (GR)
(72) Inventor: Chalkdis, Thomas, 26222 Patras (GR); Nomikos, George, 26442 Patras (GR); Trakakis, Antonis, 16562 Ano Glyfada (GR); Volta, Massimo, 17562 Paleo Faliro (GR); Zolotas, Spyridon, 18545 Piraeus (GR)
(74) Representative: Stolmár & Partner Patentanwälte PartG mbB

(57) **Abstract**

The invention relates to a propulsion system for a ship comprising at least one combustion unit for a methane-containing fuel, at least one methane steam reformer, at least one hydrogen fuel cell and/or at least one combustion engine running on hydrogen, at least one device for separating formed carbon dioxide and at least one transmission unit for driving the ship's propeller.

## Description

The present invention relates to a propulsion system for a ship, and more particularly to a propulsion system which is both environmentally friendly and efficient.

The annual fuel consumption of commercial shipping is about 250 mtoe or about 250 million tons of crude oil. The annual production of ammonia is approx. 125 mtoe and that of methanol approx. 50 mtoe. Ammonia is toxic and its combustion produces nitrous oxide which is an extremely harmful greenhouse gas (GHG). So-called green fuels or future fuels, i.e. liquid fuels that can be produced on the basis of biomass or sustainably generated electricity, will certainly not be available on a large scale in this decade and, if available, the costs for these fuels will be a factor of 2-3 higher than the corresponding fuel costs today. Against this background, the selection of suitable propulsion units and corresponding propulsion systems for shipping and especially for new shipbuilding will be associated with a high degree of uncertainty and financial risk in the future. Investing in a new ship, e.g. in the construction of a new tanker, which will be equipped with a conventional propulsion system based on heavy fuel oil, diesel or gas, can therefore hardly be considered a promising investment for the future.

In general, hydrogen is considered a possible fuel for the future, especially if it is produced with so-called green electricity from wind power or photovoltaics. However, such hydrogen technology is also directly linked to various technical and safety problems. Measured against future demand, there is only a very small production capacity for hydrogen. In addition, there is an insufficient transport and storage infrastructure, the low energy density of hydrogen (only about 40% of that of LNG = Liquid Natural Gas), the large amount of energy required for hydrogen liquefaction, a low cryogenic temperature and high demands on the tank material for longer storage. Therefore, hydrogen is not very suitable for longer transports.

Against this background, the task of the present invention was to provide an environmentally friendly and at the same time sustainable fuel and a drive unit using this fuel, which is also suitable for non-stationary use on land, such as for mobile off-shore use, e.g. on board an ocean-going ship. Furthermore, this suitability should be directly available for a transitional period in which the so-called green and future fuels are not yet sufficiently available and not at economically acceptable conditions.

This task is solved by a propulsion system, in particular a propulsion system for ships, according to claim 1. Preferred embodiments of such a system are given in the dependent claims.

The propulsion system according to the invention is particularly suitable for mobile use, such as on a ship. And here preferably for a ship using LNG as fuel and/or transporting LNG. The propulsion system according to the invention uses as fuel alone or in addition to the original fuel (e.g. LNG) hydrogen, which is produced on board the ship and can be used as fuel in hydrogen fuel cells to produce electricity and/or as fuel in an internal hydrogen combustion engine. According to the invention a ship may have LNG combustion engines, hydrogen fuel cells and/or hydrogen combustion engines. Hydrogen is therefore not carried in a separate tank on the ship according to the invention.

The central element of this propulsion unit is a methane steam reforming unit, in which the so-called steam methane reforming process takes place or is implemented. A methane steam reformer required for this is known in the state of the art in a wide variety of designs, including very compact designs, and is offered on the market by various companies, e.g. Helbio, Air Liquide Engineering & Construction. With these mobile methane steam reformers, which can be used on a ship, hydrogen can be produced on a small or large scale.

In the process, hot steam is mixed with the gas to be reformed, preferably natural gas or LNG, which contains methane as its main component, and reacted in the gas phase with the addition of energy at a catalyst. Ultimately, carbon dioxide and hydrogen are formed as reaction products (reaction equation (a)). Any carbon monoxide formed can be further converted to carbon dioxide with water vapor to increase the overall yield (reaction equation (b)).

(a) CH₄ + 2 H₂O ------ CO₂ + 2 H₂

(b) CO + H₂O -------- CO₂ + H₂

It is important to note that the carbon dioxide formed is captured and stored, i.e. not released into the atmosphere, in the sense of the CCUS process (Carbon Capture Use and Storage). For the capture and storage of the carbon dioxide formed, two processes are preferably available. First, the carbon dioxide formed can be liquefied and stored in a separate tank. This is done with compressors that compress carbon dioxide below the temperature of 31°C (critical temperature) by compression and cooling to a colorless liquid, which can then be stored in a suitable tank. Corresponding devices (e.g. so-called piston compressors) are also known in the state of the art as separate compact units and are commercially available as so-called CO₂ compressors (e.g. Atlas Copco Kompressoren, Hanover, Germany). The carbon dioxide produced and stored on board is then put to suitable uses on land. CO₂ can also be separated by the well-known process of cryogenic separation at very low temperatures. Respective units for separation are also available in the market; e.g. the Cryocap^{™} H₂ technology of Air Liquide Engineering & Construction. The two aforementioned processes are used in the prior art, but they have relatively high energy requirements, which are critical for mobile applications on board a ship. Most preferred is the cryogenic separation of CO₂ by cryogenic cooling and liquefaction of CO2.The temperature of liquid LNG in the tank (- 163°C) is sufficient to liquefy only the CO₂ coming out of the steam methane reforming process, which then drains and separates.

As an alternative and also according to the invention, the capture of CO2 by chemical absorption can be installed. CO2 is absorbed typically using amines to form a soluble carbonate salt. The absorber operates below 60°C and ambient pressure. By heating the salts formed, the raw materials can be recovered, e.g. on land, and CO2 can be fed to the intended use.

The hydrogen required as fuel and formed in the reforming process is separated, e.g. by so-called pressure swing adsorption, and then fed into a hydrogen fuel cell. These are preferably so-called PEM (polymer electrolyte membrane) or SOFC (solid oxide fuel cell) fuel cells. Here, the fuel hydrogen is converted with the atmospheric oxygen into water and electrical energy, i.e. bound chemical energy is converted into electrical energy with efficiencies of approx. 60%. This electrical energy or the electrical current generated in this way then drives electric motors, which serve as the sole propulsion or as a hybrid drive, i.e. together with the original propulsion such as LNG gas turbines, for the ship. Suitable fuel cells are available on the market. In Germany, for example, 50 suppliers and producers (e.g. Ballard, Viessmann, DE) are active in the fuel cell field.

It follows from this that the propulsion system according to the invention is particularly suitable for ships which are operated with gas, in particular with LNG, and/or which also transport LNG.

In principle, the following propulsion systems are possible for ship operation:
1. propulsion exclusively via internal combustion engines (e.g. gas turbines LNG) with four-stroke internal combustion engines,
2. hybrid propulsion: 2-stroke and 4-stroke combustion engines combined with hydrogen fuel cells and/or hydrogen combustion engines,
3. propulsion exclusively via hydrogen fuel cells and/or hydrogen combustion engines.

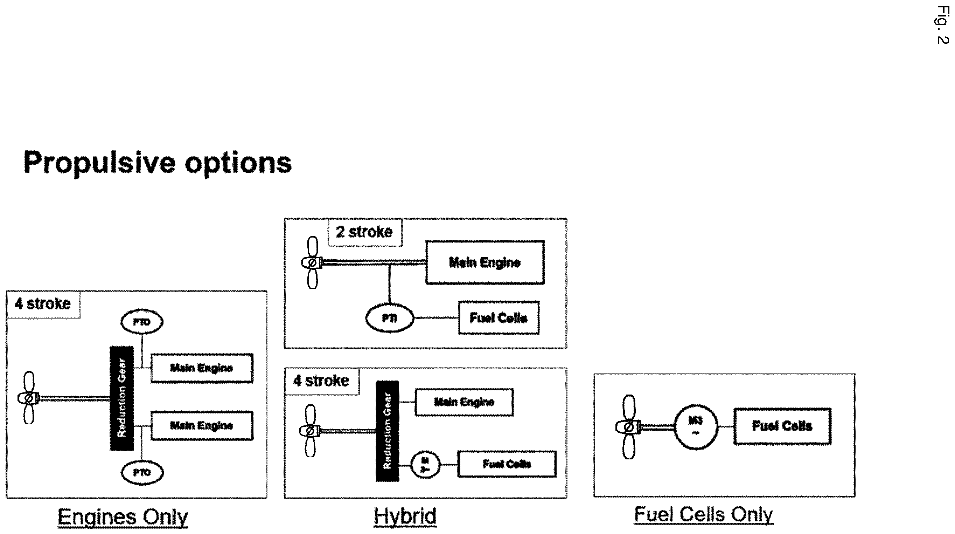

According to the invention, a hybrid drive, in particular for continuous operation, is the preferred drive system. By installing a so-called hybrid drive, different types of drive can be efficiently combined with each other. For this purpose, various configuration options exist in which a so-called power take-off (PTO) or a power take-off (PTI) or a combination of PTO and PTI are used. Especially by integrating a power take-off (PTI), conventional transmissions can be made hybrid-capable and electric motors can be connected. For such installations, which are shown for example in Fig. 2, various solution concepts and suppliers exist on the market, such as ZF (Zahnradfabrik Friedrichshafen) Marine in Germany.

The efficiency with simultaneous environmental compatibility is exemplified by the following tables 1-4, which show the fuel consumption (conventional and LNG propulsion) and the carbon dioxide emissions for 4 different propulsion scenarios of an ocean-going vessel (e.g. LNG tanker). Table 1 shows a conventional and LNG propulsion, Table 2 an LNG fueled 4 stroke propulsion, Table 3 a hybrid propulsion (LNG propulsion and electric motors) and Table 4 a pure fuel cell or electric motor propulsion.

FOC stands for Fuel Oil Consumption, LNG con for LNG consumption, kn for speed in knots and CO₂ capt for CO₂ captured and stored in a tank. The values in the Reduction column refer in each case to the reduction of the greenhouse gas CO₂ compared to a conventional drive, for which the values are shown in Table 1. The savings potential is clearly recognisable. With regard to the hybrid drive (Table 3), it should be noted that a reduction in speed has a particularly beneficial effect on fuel/LNG consumption and CO₂ emissions.

**Tab. 1 LNG as fuel (conventional propulsion)**

| Speed kn | Required power Propulsion kW | Hotel kW | Running on fuel oil FOC kg/h | CO₂ kg/h |
|---|---|---|---|---|
| 11.0 | 6,000 | 800 | 1,116 | 3,475 |
| 12.0 | 7,500 | | 1,346 | 4,190 |
| 13.0 | 9,500 | | 1,640 | 5,107 |
| 14.0 | 12,000 | | 2,009 | 6,255 |

**Tab. 2 LNG fueled (4 stroke) propulsion**

| Speed kn | Total power kW | LNG cons kg/h | CO₂ kg/h | CH₄ kg/h | Total CO₂ kg/h | Reduction % |
|---|---|---|---|---|---|---|
| 11.0 | 6,800 | 1,002 | 2,755 | 343 | 3,098 | 11 |
| 12.0 | 8,300 | 1,220 | 3,355 | 418 | 3,773 | 10 |
| 13.0 | 10,300 | 1,518 | 4,173 | 519 | 4,692 | 8 |
| 14.0 | 12,800 | 1,872 | 5,147 | 645 | 5,792 | 7 |

**Tab. 3 Hybrid propulsion (LNG/4-stroke plus H₂-Fuel cell)**

| | | Engine | | | Fuel cells/reformer | | | Totals | | | |
|---|---|---|---|---|---|---|---|---|---|---|---|
| Speed kn | Total power kW | Power kW | LNG cons kg/h | CO₂ emis kg/h | Power kW | LNG cons kg/h | CO₂ emis kg/h | LNG cons kg/h | CO₂ emis kg/h | Reduct % | CO₂ capt kg/h |
| 11.0 | 7,150 | 6,720 | 867 | 2,385 | 430 | 99 | 52 | 966 | 2,437 | 30 | 194 |
| 12.0 | 8,650 | 6,720 | 867 | 2,385 | 1,930 | 445 | 233 | 1,312 | 2,618 | 38 | 873 |
| 13.0 | 10,650 | 6,720 | 867 | 2,385 | 3,930 | 905 | 474 | 1,772 | 2,859 | 44 | 1,779 |
| 14.0 | 13,150 | 6,720 | 867 | 2,385 | 6,430 | 1,482 | 776 | 2,349 | 3,161 | 49 | 2,911 |

**Tab. 4 Fuel cells only propulsion**

| Speed kn | Prop power kW | Total kW | LNG cons kg/h | CO₂ emis kg/h | Reduct % | CO₂ capt kg/h |
|---|---|---|---|---|---|---|
| 11.0 | 6,000 | 6,800 | 1,567 | 820 | 76 | 3,078 |
| 12.0 | 7,500 | 8,300 | 1,913 | 1,002 | 76 | 3,757 |
| 13.0 | 9,500 | 10,300 | 2,374 | 1,243 | 76 | 4,663 |
| 14.0 | 12,000 | 12,800 | 2,950 | 1,545 | 75 | 5,795 |

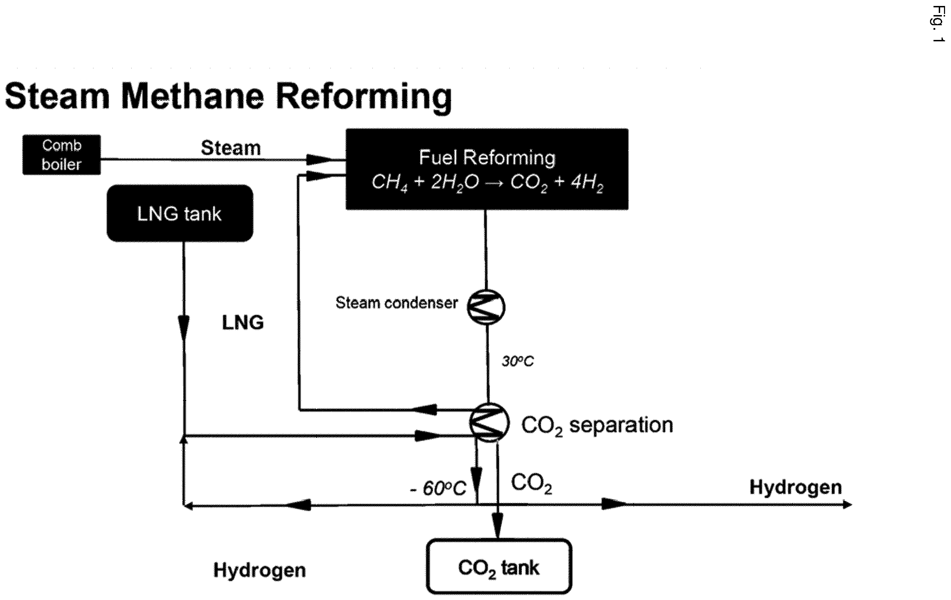

In the following, further details and preferred embodiments of the present invention will be explained in more detail with reference to Figs. 1 and 2, without limiting the invention in any way.

Fig. 1 shows schematically the Methane Steam Reforming Process and thus the operation of a methane steam reformer.

Fig. 2 shows examples of various propulsion systems or propulsion concepts, in particular hybrid or pure fuel cell propulsion systems according to the invention, with LNG propulsion, which are covered by the present invention.

In order to facilitate the readability of Figs. 1 and 2, and in view of the fact that these figures show only a few keywords or features, the use of reference signs and a corresponding list of reference signs has been omitted.

The most important advantages of the propulsion concept or propulsion system according to the invention, preferably suitable for mobile use and here in particular for ships with LNG propulsion and/or LNG tankers, comprising a combination of gas or LNG propulsion and hydrogen fuel cells or hydrogen fuel cells alone, in which methane is converted with water vapour to carbon dioxide and hydrogen, are listed below:
- the necessary propulsion elements methane steam reformer and hydrogen fuel cells are available as ready-made and compact units from various suppliers,
- the same applies to the necessary transmissions, such as hybrid transmissions, to link different drive units together,
- this means that the conversion of a ship, e.g. an LNG tanker, with LNG propulsion can also be carried out subsequently, i.e. after commissioning, and
- with the propulsion system according to the invention, future values for CII (= carbon intensity indicator which is a measure of how efficiently a ship transports goods and passengers) within the framework of IMO2050 (= the international maritime organisation's initial Greenhouse Gas Strategy) can be achieved and maintained, and
- no hydrogen is transported on board a ship (no hydrogen tank),
- the methane slip (methane is the main component of LNG) is reduced, i.e. the amount of methane that escapes unused and unburned into the atmosphere, which is a far more harmful greenhouse gas than carbon dioxide, is reduced.

Furthermore, the present invention provides a future-proof propulsion system that is relevant not only for environmental reasons but also for economic considerations and cost reasons with regard to a future taxation of CO2.

## Claims

1. Propulsion system for a ship comprising at least one combustion unit for a methane-containing fuel, at least one methane steam reformer, at least one hydrogen fuel cell and/or at least one internal combustion engine fueled with hydrogen, at least one device for separating formed carbon dioxide and at least one transmission unit for driving the ship's propeller.

2. Propulsion system according to claim 1, **characterized in that** the methane-containing fuel contains methane as main component.

3. Propulsion system according to claim 1 or 2, **characterized in that** the fuel is gas, in particular LNG.

4. Propulsion system according to one of the claims 1 to 3, **characterized in that** the at least one transmission unit is a hybrid transmission which connects the different drive units, combustion unit, hydrogen fuel cell and/or internal combustion engine fueled with hydrogen, to one another.

5. Propulsion system according to any one of claims 1 to 4, **characterized in that** the transmission has a power take-off (PTO) and/or a power take-off (PTI).

6. Propulsion system according to any one of claims 1 to 5, **characterized in that** the at least one hydrogen fuel cell is a PEM (Polymer Electrolyte Membrane) or SOFC (Solid Oxide Fuel Cell) fuel cell.

7. Propulsion system according to any one of claims 1 to 6, **characterized in that** the carbon dioxide formed in the methane steam reformer is separated in liquid form and stored in a tank.

8. Propulsion system according to any one of claims 1 to 6, **characterized in that** the carbon dioxide formed in the methane-steam reformer is separated by cryogenic separation or chemical absorption.

9. Propulsion system according to any one of claims 1 to 8, **characterized in that** the vessel is an LNG fueled vessel and/or an LNG transporting tanker vessel.

10. Propulsion system according to any one of claims 1 to 9, **characterized in that** the propulsion unit is operated in hybrid mode of LNG combustion unit and hydrogen fuel cell and/or combustion engine running on hydrogen.

11. Use of a methane steam reformer as a propulsion element for a propulsion unit on a ship which is operated in hybrid mode from an LNG combustion unit and a hydrogen fuel cell and/or a combustion engine running on hydrogen.
